(19) Europäisches Patentamt
European Patent Office
Office européen des brevets

(11) **EP 2 701 387 A1**

(12) **EUROPEAN PATENT APPLICATION**

(43) Date of publication:
**26.02.2014 Bulletin 2014/09**

(51) Int Cl.:
**H04N 9/31** *(2006.01)*

(21) Application number: **12306015.4**

(22) Date of filing: **22.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventors:
• **Cuisenier, Laurent**
 **38300 Bourgoin Jallieu (FR)**
• **Lauga-Larroze, Christophe**
 **38000 Grenoble (FR)**
• **Roffet, Frederique**
 **38500 Coublevie (FR)**

(74) Representative: **Hirsch & Associés**
 **58, avenue Marceau**
 **75008 Paris (FR)**

(54) **Method for correction of defects in image projection for a handheld projector**

(57)  It is proposed a method for eliminating defects in the projection by a handheld projector (2) of an image (1A) to be projected on a display surface (3), said defects being due to bad alignment of said handheld projector (2) with said display surface (3), and said method comprising:

● a step of compensation for said defects wherein a compensated image (1B) is generated from said image (1A) to be projected, according to a reference spatial orientation (221) of the projector and to a current spatial orientation (222) of said handheld projector (2);
● and a step of projecting onto said display surface (3) the compensated image (1B).

Fig.3

**Description**

FIELD OF THE INVENTION

The invention relates to the field of corrections of defects in image projection by projectors and especially by handheld pico-projectors projecting images on a plane projecting surface.

BACKGROUND OF THE INVENTION

Pico-projectors are projectors incorporated in handheld devices such as smartphones or tablets. The use of the feature of projecting images is not limited any more to devices positioned on tables horizontally and well situated in respect of the vertical projection surface. But instead, a pico-projector can take varying positions during the same projection session. For example, the position of a pico-projector on a bag in a moving train can change due to little shocks. The elevation angle and the inclination angle of the pico-projector which are the angle of the central light beam line with respectively the horizontal plane, and the vertical plane can vary during the projection session, as well as the rotation angle which is the orientation angle of the pico-projector around the projection surface normal axis.

When the projector central light beam line is not normal to the projecting surface, the projection of a rectangle will not be a rectangle, but could be a trapezoid, and even any quadrilateral in the projection, as a consequence of elevation and inclination or any combination of the two. In the case of rotation, the orientation of the pico-projector is such that the projection of a rectangle will still be a rectangle but badly oriented. There is a need to correct automatically arisen defects due to change in the position of the pico-projector.

In office projectors, how to eliminate keystones distortions, which are defects due to any combination of elevation and inclination of the projector, has been tackled in several background arts.

In a first prior art, for example the patent applications US6974217 /US20040041985, the projector comprises an angle elevation sensor. The keystone correction is triggered automatically when the angle stops varying and after the angle correction calculation is achieved. Only keystone distortion due to elevation angle is corrected by this system.

In a second prior art, for example the patent application US20090190046, keystones distortions implied by an irregular projection surface are compensated through camera captured image and image processing.

In a third prior art, for example the patent application US7475995, a virtual projection plane is used. The projection of an input image on a real projection plane is compared to the projection of the same input image on a virtual projection plane. The distortion due to inclination between the two projection planes is corrected thanks to an image processing module.

In a fourth prior art, for example the patent application US7717569, a correction is made from at least two images captured taken by an integrated camera triggered by the user. A reference picture image is used by a projection processing circuitry. The reference picture image is projected onto a projector screen; an image capturing circuitry provides digital capturing of the projector screen. A distortion calculating circuitry is configured to calculate user perceived distortion of the reference picture image using digital capturing of the reference picture image data.

In a fifth prior art, for example the patent application WO2006047447, a reference image is compared with its output to develop a warping map. A reference image pattern is displayed on a viewing screen. A location and a shape of the projected image are captured with a camera. A microprocessor connected to the camera calculates distortions effects by comparing projected image of the reference image pattern with the reference image pattern. A warping map is generated based on the comparison of the reference image pattern and the captured projected image of the reference image pattern.

Taking into account the specifics of pico-projectors requires considering their ability to lie on irregular places and to change their orientation even if this change is light. There is a need for a solution permitting to correct defects due to horizontal elevation or vertical inclination or rotation, not requiring necessarily time or cost consuming image processing.

SUMMARY OF THE INVENTION

An object of embodiments of the present invention is to alleviate at least partly the above mentioned drawbacks. More particularly, embodiments of the invention aim at improving projectors defects compensations. Adjusting a projector by moving it around until the projected image is no more optically distorted or badly oriented can be tedious. An advantage of an embodiment of the invention is to enable the user not to have to restart such adjustment after having completed a first one, even if there is a further change in the position of the projector.

The object of the invention is achieved with a method for eliminating defects in the projection by a handheld projector of an image to be projected onto a display surface, the defects being due to bad alignment of the handheld projector with the display surface, the method comprising: a step of compensation for the defects wherein a compensated image is generated from the image to be projected, according to a reference spatial orientation of the handheld projector, and to a current spatial orientation of the handheld projector; and a step of projecting onto the display surface the compensated image.

Preferred embodiments comprise one or more of the following features.

The step of compensation comprises a sub-step of measuring and memorizing the reference spatial orientation in a readable medium.

The sub-step of measuring and memorizing the reference spatial orientation in a readable medium is triggered by the user of the handheld projector.

The step of compensation further comprises a sub-step of measuring at substantially regular period of time the current spatial orientation and memorizing the current spatial orientation in a readable medium after a change in the spatial orientation of the handheld projector.

The measuring is done by a spatial gyroscope sensor.

The step of compensation utilizes a graphics processing unit process to generate the compensated image by performing an inverse distortion based on the difference of orientation of the projector between the current spatial orientation and the reference spatial orientation.

The compensation step can utilize a digital image processing technique to generate the compensated image by performing an inverse distortion based on the difference of orientation of the projector between the current spatial orientation and the reference spatial orientation.

The object of the present invention is also achieved by a handheld projector adapted to eliminate defects in the projection of an image onto a display surface, the defects being due to bad alignment of the handheld projector with the display surface, the handheld projector being adapted to generate a compensated image from the image to be projected, according to a reference spatial orientation of the handheld projector, and to a current spatial orientation of the handheld projector; and adapted to project onto the display surface the compensated image.

Preferred embodiments comprise one or more of the following features.

The handheld projector comprises a spatial gyroscope sensor adapted to sense the reference spatial orientation and the handheld projector is configured for memorizing the reference spatial orientation in a readable medium.

The handheld projector further comprises a trigger element available to the user to start the memorizing of the reference spatial orientation in a readable medium.

The spatial gyroscope sensor is adapted to sense the current spatial orientation, and the handheld projector is configured for memorizing the current spatial orientation in a readable medium.

The handheld projector is adapted to utilize a graphics processing unit process to generate the compensated image by performing an inverse distortion based on the difference of orientation of the projector between the current spatial orientation and the reference spatial orientation.

The handheld projector is adapted to utilize a digital image processing technique to generate the compensated image by performing an inverse distortion based on the difference of orientation of the projector between the current spatial orientation and the reference spatial orientation.

The object of the present invention is also achieved with a computer program product comprising a computer readable medium, having thereon a computer program comprising program instructions, the computer program being loadable into a data-processing unit and adapted to cause execution of the previous method when the computer program is run by the data-processing unit.

Further features and advantages of embodiments of the invention will appear from the following description of some embodiments of the invention, given as nonlimiting examples, with reference to the accompanying drawings listed hereunder.

BRIEF DESCRIPTION OF THE DRAWINGS

Fig. 1 shows a block diagram of a configuration for projecting an image without compensation;
Fig. 2 shows a block diagram of a configuration for projecting an image with compensation in accordance with an embodiment of the invention;
Fig. 3 shows a block diagram illustrating an exemplary configuration of a compensation module in accordance with an embodiment of the invention;
Fig.4a to Fig.4d represent a range of figure illustrating defects in a projection process

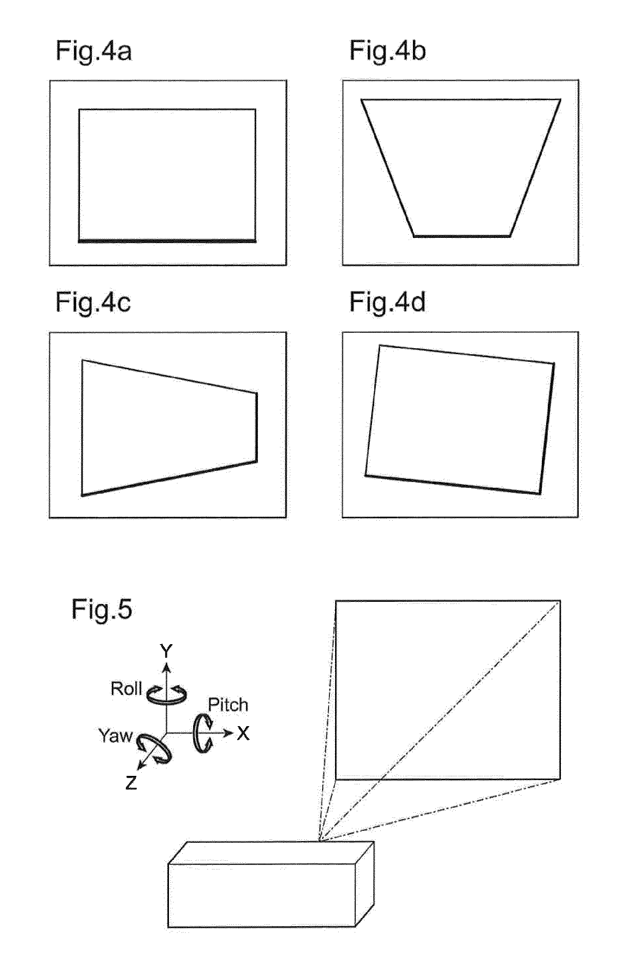

Fig.4a is an image of a rectangle correctly projected
Fig.4b is an image of a rectangle badly projected because of inclination
Fig.4c is an image of a rectangle badly projected because of elevation
Fig.4d is an image of a rectangle badly projected because of rotation
Fig. 5 shows a graphics representative of a view of the projector and a projection surface in a Cartesian coordinate system representative of the reference mark in accordance with an embodiment of the invention;

DETAILED DESCRIPTION OF EMBODIMENTS OF THE INVENTION

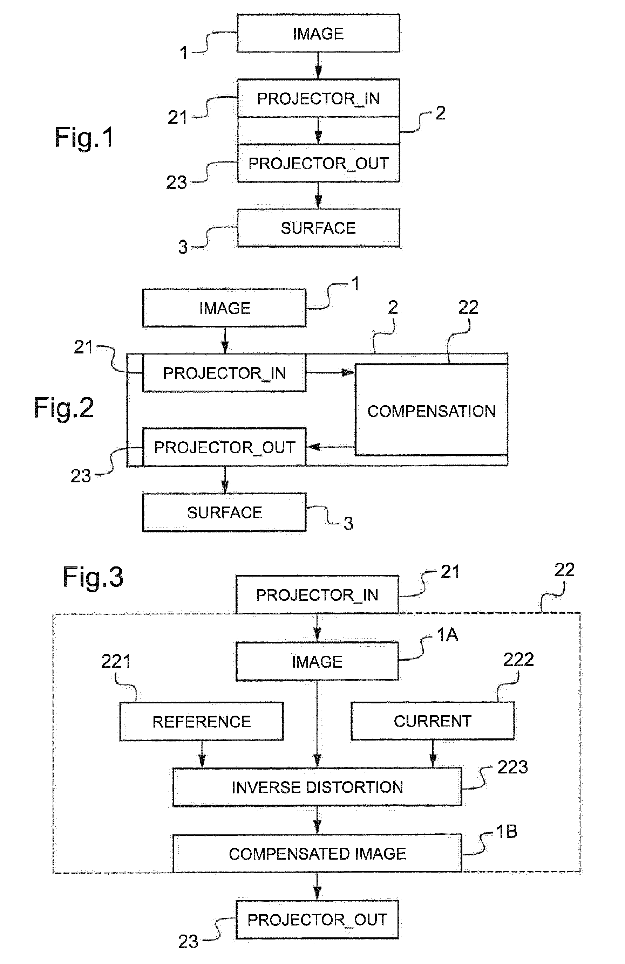

Fig. 1 shows a block diagram of a configuration for projecting an image without compensation. Fig.1 comprises an image 1, a projector 2, and a projection surface 3. Of the projector, the projector image reception 21 and the projector image output 23 are represented. If there is no transformation of the image 1 within the projector 2, the image 1 navigates unchanged through the processor 2 until the processor output 23. But when the position of the projector 2 is such that the elevation angle is not zero degree or the inclination angle is not zero degree, or any combination as such, then the resulting image at the projection surface 3 is distorted. To have a resulting image at the projection surface 3 close to the input image 1, a compensation phase is necessary.

Fig. 2 shows a block diagram of a configuration for projecting an image with compensation in accordance with an embodiment of the invention. Fig.2 comprises an image 1, a projector 2, and a projection surface 3. Of the projector, the projector image reception 21 and the projector image output 23 are represented. Furthermore, in the projector, between the projector image reception 21 and the projector image output 23, a compensation module 22 is integrated. With the compensation module 22, the image transmitted at the projector output 23 is a compensated image in respect of the input image 1 to enable the resulting image at the projection surface to be close to the initial image 1. The projection surface according the present invention is preferably a plane surface and is not by itself a source of image projection defects.

Fig.3 shows a block diagram illustrating an exemplary configuration of a compensation module in accordance with an embodiment of the invention. Fig.3 comprises the projector image input 21, the projector image output 23, and in between, the compensation module 22. The compensation module 22 block of Fig.3 illustrates the image 1A which is transmitted by the projector image reception 21, the reference spatial orientation 221, the current spatial orientation 222, the inverse distortion sub-module 223 and the compensated image 1B which is the output for the compensation module.

A step of calibration not represented on Fig.3 precedes the beginning of the step of compensation. At the stage of calibration, the user adjusts the handheld projector until the projected image is no more optically distorted and not badly oriented. At the end of the stage of calibration, the user triggers by available means the memorizing of the orientation of the handheld projector at that moment, as the reference spatial orientation. For simplicity and cost sake, the calibration can be done manually by the user. In such cases, the memorizing of the reference spatial orientation in a handheld projector readable medium can be done after the user has expressed its satisfaction through a validation button or any trigger element on the projector like a validation control on the human machine interface of the projector or voice command for example. By such validation, the user calls for the compensation module 22 to save the values of the elevation, inclination and rotation angles as reference spatial orientation.

Alternatively, the calibration can be done automatically. In that case, even the reference position can correspond to a compensated image. A camera and a processing unit are used to generate a first compensated image compensating for a first image distortion. There is a sequence of comparisons between original reference image and the image projected as captured by the camera and inverse distortion calculations until the comparison between original reference image and the image projected is satisfactory. Further compensations will use additionally the first calibration transformation.

Whatever the embodiment, a reference spatial orientation is measured and memorized in a readable medium at the end of the calibration step.

In the compensation step, an image 1A received by the compensation module is compensated or warped at the output of the compensation module and restored at the plane display surface. In fact, an image 1A received from the projector image reception is transmitted to the inverse distortion sub-module. The inverse distortion sub-module transforms the received image 1A into another image 1B, based on the difference of orientation of the handheld projector between the current spatial orientation and the reference spatial orientation, by transformations where both the reference position 221 defined by its elevation, inclination and rotation angles and the current position 222 defined also by its elevation, inclination and rotation angles, intervene as parameters. The expressions of those transformations include the case where the reference position 221 and the current position 222 are the same, which means that the projector 2 has not changed its position since last calibration by the user. The transformations can be any of inverse distortions methods well known by the man skilled of the art to generate a compensated image by performing an inverse distortion based on the difference of orientation of the projector between the current spatial orientation and the reference spatial orientation. Among those inverse distortions methods are graphics processing unit (GPU) implementations and digital image processing techniques. For GPU implementations, the spatial transformation can consist of a triangle mesh with one triangle defined by 3 vertices or points. The transformation is executed by texture mapping from the rectilinear mesh of the input image to the transformed shape of the destination image. In digital image processing implementation, the spatial transformation consists of spatially defined 2-dimensional image re-sampling or scaling filter. The scaling operation is performed with different scaling ratios in different parts of the image, according to the defined transformation. Whatever the inverse distortion method, the reference spatial orientation is refreshed after a new calibration and a new call for memorizing by the user when the user considers that the projection output on the projection surface is satisfactory.

In a preferred embodiment, a handheld projector according to the present invention comprises a spatial or a 3-axes gyroscope sensor to measure angles and angles variations by its sensing abilities. A gyroscope is an orientation sensor. It gives angles evolution around one to three axes and according to a reference mark. As we deal here with spatial displacement of the handheld projector, a spatial or 3-axes gyroscope is needed to measure or sense each of the three angles determining the orientation of the handheld projector. Considering that the projection surface is vertical, the 3 axes considered here are the horizontal axis belonging to the projection surface, the vertical axis belonging to the projection surface, and the normal axis to the projecting surface.

Practically, the compensation module thanks to the 3-axes gyroscope sensor senses and checks current position preferably at substantially regular period of time and saves new values of angles in case of change in a readable medium on the electronics that drives the pico-projector.

But alternative implementations are possible. For example when using the handheld pico-projector not in polling mode like previously, but in interrupt mode. In that case, the detection of movement by the incorporated movement sensor would be the condition for the 3-axes gyroscope to trigger the measuring or the sensing of the orientation angles.

In other embodiments, the handheld projector can be equipped with cameras to catch the reference spatial position or the current spatial position like in the cited prior art US7717569.

The handheld projector may comprise a computer readable medium such that computers programs are loadable into data-processing units and capable of executing embodiments of the present invention. At the end of the compensation of an image to be projected, the compensated image is projected on the display surface instead of the image to be projected.

Fig.4a to Fig.4d represent a set of figures illustrating defects in a projection process.

Fig.4a is an image of a rectangle correctly projected. In Fig.4a, the projector is correctly oriented according to the projecting surface and the resulting projection of a rectangle is a rectangle. This orientation can constitute a reference position during calibration step, as the result is satisfactory.

Fig.4b is an image of a rectangle badly projected because of elevation. In Fig.4b, there is a bad alignment, the projector is not correctly oriented according to the projecting surface and the resulting projection of a rectangle is not a rectangle, but a trapezoid with a front side longer than its bottom side. Schematically, Fig.4b looks like a face view of a rectangle where the front line is at the forefront and the bottom line is at the background. It comes from a bad vertical orientation angle of the light beam projector according to the projecting surface and an existing elevation angle.

Fig.4c is an image of a rectangle badly projected because of inclination.

In Fig.4c, there is bad alignment, the projector is not correctly oriented according to the projecting surface and the resulting projection of a rectangle is not a rectangle, but a trapezoid with a left side longer than the right side. Schematically, Fig.4c looks like a face view of a rectangle where the left side line is at the forefront and the right side line is at the background. It comes from a bad horizontal orientation angle of the light beam projector according to the projecting surface and an existing inclination angle.

Fig.4d is an image of a rectangle badly projected because of rotation.

In Fig.4d, there is bad alignment, the projector is not correctly oriented according to the projecting surface and the resulting projection of a rectangle is a rectangle, but badly oriented. It comes from a bad axial orientation angle of the projector according to the projection surface normal axis and an existing rotation angle.

More generally, any bad orientation will result from one of the precedent defects, or any combination of two or three defects of sort.

Fig. 5 shows a graphic representative of a view of the projector and a projection surface in a Cartesian coordinate system representative of the reference mark in accordance with an embodiment of the invention. According to Fig.5, the elevation of the pico-projector corresponds to a rotation around the X axis also called pitch; the inclination of the pico-projector corresponds to a rotation around the Y axis also called roll; and the rotation of the pico-projector corresponds to a rotation around the Z axis also called yaw. A bad position of the pico-projector according to the display surface will correspond to any combination of rotations of the pico-projector around those axes. Inverse distortion transformations can be expressed in a Cartesian coordinate system representative of the reference mark as represented in Fig.5 as rotation matrices products. According to a preferred embodiment of the present invention, at substantially regular period of time, the compensation system checks current device position. When a change is detected in one of the angles, the compensation system applies to the projection system the corresponding inverse angle rotation. The new vector position within the projector output is calculated accordingly by matrix multiplication. For example after an inclination or a rotation around X-axis of angle "$\alpha$" according to the reference position, the new position of a point is calculated by multiplying the corresponding rotation matrix by the point coordinates at the reference spatial orientation. The inverse distortion correction will consist at contrary on applying a rotation of inverse angle "-$\alpha$" to the current position. The final point position coordinates (x',y',z') of a point coordinates (x,y,z) at current spatial orientation will be obtained after inverse distortion correction by the following relationships:

$$\begin{pmatrix} x' \\ y' \\ z' \end{pmatrix} = \begin{pmatrix} 1 & 0 & 0 \\ 0 & \cos(-\alpha) & -\sin(-\alpha) \\ 0 & \sin(-\alpha) & \cos(-\alpha) \end{pmatrix} \begin{pmatrix} x \\ y \\ z \end{pmatrix}$$

By combining all rotation matrices around X,Y and Z-axis, a global matrix can be defined and applied to each input point. The global matrix corresponding to a combination of rotations is the product of matrices corresponding to each individual rotation.

The invention has been described with reference to preferred embodiments. However, many variations are possible within the scope of the invention.

## Claims

1. A method for eliminating defects in the projection by a handheld projector (2) of an image (1) to be projected onto a display surface (3), said defects being due to bad alignment of said handheld projector (2) with said display surface (3), said method comprising:

   • a step of compensation for said defects wherein a compensated image (1B) is generated from said image (1) to be projected, according to a reference spatial orientation (221) of said handheld projector (2), and to a current spatial orientation (222) of said handheld projector (2);
   • and a step of projecting onto said display surface (3) said compensated image (1B)

2. A method according to claim 1 wherein said step of compensation comprises:

   • a sub-step of measuring and memorizing said reference spatial orientation (221) in a readable medium.

3. A method according to the previous claim wherein:

   • said sub-step of measuring and memorizing said reference spatial orientation (221) in a readable medium is triggered by the user of said handheld projector (2).

4. A method according to any of precedent claims wherein:

   • said step of compensation further comprises:

   A sub-step of measuring at substantially regular period of time said current spatial orientation (222) and memorizing said current spatial orientation (222) in a readable medium after a change in the spatial orientation of said handheld projector (2).

5. A method according to the previous claim wherein said measuring is done by a spatial gyroscope sensor

6. A method according to any of precedent claims wherein:

   • said step of compensation utilizes a graphics processing unit process to generate said compensated image (1B) by performing an inverse distortion based on the difference of orientation of the projector between said current spatial orientation (222) and said reference spatial orientation (221).

7. A method according to any of claims 1 to 5 wherein:

   • said compensation step utilizes a digital image processing technique to generate said compensated image (1B) by performing an inverse distortion based on the difference of orientation of the projector between said current spatial orientation (222) and said reference spatial orientation (221).

8. A handheld projector (2) adapted to eliminate defects in the projection of an image (1) onto a display surface (3), said defects being due to bad alignment of said handheld projector (2) with said display surface (3), said handheld projector (2) being:

   • Adapted to generate a compensated image (1B) from said image (1) to be projected, according to a reference spatial orientation (221) of said handheld projector (2), and to a current spatial orientation (222) of said handheld projector (2);
   • And adapted to project onto said display surface (3) said compensated image (1B).

9. A handheld projector (2) according to claim 8 wherein:

   • said handheld projector (2) comprises a spatial gyroscope sensor adapted to sense said reference spatial orientation
   • and said handheld projector (2) is configured for memorizing said reference spatial orientation (221) in a readable medium

10. A handheld projector according the previous claim further comprising a trigger element available to the user to start said memorizing of said reference spatial orientation in a readable medium

11. A handheld projector (2) according to any of claims 9 to 10 wherein:

    • said spatial gyroscope sensor is adapted to sense said current spatial orientation (222),
    • and said handheld projector (2) is configured for memorizing said current spatial orientation (222) in a readable medium

12. A handheld projector (2) according to any of claims 8 to 11 wherein said handheld projector (2) is adapted to utilize a graphics processing unit process to generate said compensated image (1B) by performing an inverse distortion based on the difference of orientation of the projector between said current spatial orientation (222) and said reference spatial orientation (221).

13. A handheld projector (2) according to any of claims 8 to 11 wherein said handheld projector (2) is adapted to utilize a digital image processing technique to generate said compensated image (1B) by performing an inverse distortion based on the difference of orientation of the projector between said current spatial orientation (222) and said reference spatial orientation (221)

**14.** A computer program product comprising a computer readable medium, having thereon a computer program comprising program instructions, the computer program being loadable into a data-processing unit and adapted to cause execution of the method according to any of claims 1 to 7 when the computer program is run by the data-processing unit.

## Fig.1

1 — IMAGE

PROJECTOR_IN — 21

2

PROJECTOR_OUT — 23

3 — SURFACE

## Fig.2

IMAGE — 1

21 — PROJECTOR_IN → COMPENSATION

2    22

PROJECTOR_OUT ← 

23

SURFACE — 3

## Fig.3

PROJECTOR_IN — 21

22

IMAGE — 1A

221 — REFERENCE

CURRENT — 222

INVERSE DISTORTION — 223

COMPENSATED IMAGE — 1B

PROJECTOR_OUT

23

## Fig.4a

## Fig.4b

## Fig.4c

## Fig.4d

## Fig.5

Europäisches
Patentamt

European
Patent Office

Office européen
des brevets

# EUROPEAN SEARCH REPORT

Application Number

EP 12 30 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/008386 A2 (MICROVISION INC [US]; FREEMAN MARK O [US]; POWELL KARLTON D [US]) 20 January 2011 (2011-01-20) * paragraphs [0033] - [0034]; figures 5-8 * | 1-14 | INV. H04N9/31 |
| X | US 2010/130259 A1 (LEE DONG HOON [KR]) 27 May 2010 (2010-05-27) * paragraph [0190] - paragraph [0193]; figure 15 * | 1-14 | |
| X,D | US 2004/041985 A1 (KIMURA KEISHI [JP] ET AL) 4 March 2004 (2004-03-04) * paragraph [0063] - paragraphs [0084], [0092], [0116]; figures 2-4 * | 1-14 | |

TECHNICAL FIELDS
SEARCHED (IPC)

H04N

The present search report has been drawn up for all claims

| Place of search | Date of completion of the search | Examiner |
|---|---|---|
| Munich | 4 January 2013 | Seytter, Fritz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                 EP 12 30 6015

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2013

| Patent document cited in search report | | Publication date | Patent family member(s) | | Publication date |
|---|---|---|---|---|---|
| WO 2011008386 | A2 | 20-01-2011 | CN | 102472956 A | 23-05-2012 |
| | | | EP | 2454632 A2 | 23-05-2012 |
| | | | KR | 20120040194 A | 26-04-2012 |
| | | | US | 2011013097 A1 | 20-01-2011 |
| | | | WO | 2011008386 A2 | 20-01-2011 |
| US 2010130259 | A1 | 27-05-2010 | KR | 20100060428 A | 07-06-2010 |
| | | | US | 2010130259 A1 | 27-05-2010 |
| US 2004041985 | A1 | 04-03-2004 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6974217 B
- US 20040041985 A
- US 20090190046 A

- US 7475995 B
- US 7717569 B
- WO 2006047447 A